(19) Europäisches Patentamt
European Patent Office
Office européen des brevets

(11) **EP 1 681 457 B2**

(12) **NEW EUROPEAN PATENT SPECIFICATION**
After opposition procedure

(45) Date of publication and mention
of the opposition decision:
**19.04.2017 Bulletin 2017/16**

(45) Mention of the grant of the patent:
**12.08.2009 Bulletin 2009/33**

(21) Application number: **03758110.5**

(22) Date of filing: **08.10.2003**

(51) Int Cl.:
***F02M 31/13*** *(2006.01)*

(86) International application number:
**PCT/ES2003/000511**

(87) International publication number:
**WO 2005/033499 (14.04.2005 Gazette 2005/15)**

(54) **MODULE FOR HEATING THE INTAKE GASES OF AN AUTOMOTIVE ENGINE, WITH INTEGRATED ELECTRONIC TEMPERATURE CONTROL**

MODUL ZUR ERWÄRMUNG DER EINLASSGASE EINES KRAFTFAHRZEUGMOTORS MIT INTEGRIERTER ELEKTRONISCHER TEMPERATURREGELUNG

MODULE CHAUFFANT DES GAZ D'ADMISSION D'UN MOTEUR D'AUTOMOBILE A COMMANDE ELECTRONIQUE DE LA TEMPERATURE INTEGREE

(84) Designated Contracting States:
**AT BE BG CH CY CZ DE DK EE ES FI FR GB GR HU IE IT LI LU MC NL PT RO SE SI SK TR**

(43) Date of publication of application:
**19.07.2006 Bulletin 2006/29**

(73) Proprietor: **Nagares, S.A.**
**16200 Motilla del Palancar,**
**Cuenca (ES)**

(72) Inventor: **NAVALON CARRETERO, Herminio**
**Motilla Del Palancar,**
**E-16200 Cuenca (ES)**

(74) Representative: **Carpintero Lopez, Francisco et al**
**Herrero & Asociados, S.L.**
**Cedaceros 1**
**28014 Madrid (ES)**

(56) References cited:
| | |
|---|---|
| EP-A2- 1 348 861 | WO-A1-00/34643 |
| DE-A1- 10 041 417 | DE-A1- 19 738 318 |
| JP-B1- 6 217 357 | US-A- 4 391 132 |
| US-A- 5 094 198 | US-A- 5 454 259 |
| US-A- 5 988 146 | US-A- 6 152 117 |
| US-A1- 2002 000 221 | |

EP 1 681 457 B2

## Description

## OBJECT OF THE INVENTION

This invention relates to a heating module used for heating the gases which are introduced through the intake pipe of an internal combustion engine incorporating electronic temperature control, consisting of the following fundamental parts: heating element (resistance in the form of a continuous strip), and power control circuit which measures a temperature representative of the heating module and which manages the distribution of electrical energy in the heating element.

The object of the invention is to enable the heating module to be installed in an intake manifold, preferably of plastic, without damaging the same due to excess temperature, and optimising the performance of the engine, which is achieved through measurement of one of the representative temperatures of the heating module and the insertion of the control electronics between the supply source and the heating element so that the accidental or intentional connection of said heating element to the battery is prevented.

## BACKGROUND TO THE INVENTION

For heating the intake air of Diesel engines with high cubic capacities, such as those used in industrial and commercial vehicles, use is currently made of heaters such as those described in patents of invention US 4 512 322, US 4 685 437, US 5 988 146, WO 00/34643. These heaters consist of a frame of metal, such as aluminium, on which is fitted a resistance in the form a strip insulated from it by ceramic insulants, and incorporating no element which enables its temperature to be determined and a safety function to be implemented that enables us to fit said heating module on a plastic manifold without the risk of damage to the same due to excess temperature. US-A-2002/0000221 discloses a module for heating intake gases according to the preamble of claim 1.

All the features described above could be used directly to perform the following functions without their being optimised for any of the functions:

- Helps with cold starting
- Helps with regenerating the particle filter
- Helps in reducing pollution emissions

However, none of these functions enables the heating module to be fitted in the plastic intake manifold, optimising engine performance and ensuring that damage to the said manifold will be caused by excess temperature under any circumstance.

To optimise engine performance the heating module must meet the following requirements:

- MINIMUM CHARGE LOSS
- SHORT RESPONSE TIMES
- CAPACITY TO DISSIPATE HIGH POWERS

As we shall see, the more efficiently these design conditions are met, the better the operating temperature of the resistance, and hence the greater will be the losses of heat through the frame of said resistance to its surrounding area and the more difficult it will be ensure that damage to the manifold will not be caused by excess temperature in the event of "degraded" operation.

The situation is therefore as follows. The power dissipated in the resistance is:

$$P = V^2 / R$$

where V is constant and equal to the battery voltage, so that if we want to be able to supply high powers we require a resistance with a low ohmic value.

We also know that the resistance of a flat strip of length L and cross-section S of a material of resistivity p is:

$$R = \rho . L / S.$$

Since the value of R is determined by the power required to be dissipated in the resistance, and p will be established once the material of said resistance is selected, the only parameters that can be modified to meet the design requirements are the length L of the strip and its cross-section s. On the other hand, it is well known that the smaller the exchange area the greater will be the temperature of said area for transferring the same quantity of heat to the air flow. Thus:

A) Strips of short length L must have a low S and hence a small exchange area, which will impose high operating temperatures and minimum charge loss. At the same time the response time $t_{ON}$ will be low ($t_{ON} = K. L^2. \Delta T. BAT^2$ (is heated in less time).

B) For the same ohmic value, and selecting a strip of long length L and large cross-section S, the operating temperature may be lower because the exchange area will be greater, and hence the charge loss value will be high. $t_{ON}$ is also high.

Summarising, resistances designed according to the instructions given in section A) give us the following:

1) minimum charge loss
2) high dissipated power
3) short response times
4) relatively high operating temperature, which imposes a disadvantage (impossibility) in terms of fitting the heating module in the plastic manifold. It is pointed out that the higher temperature of the resistance the higher will be the potential for losses and the higher will be the temperature of the frame. Moreover, designs which follow the guidelines in section B) for the same dissipated powers give us:

    1) greater charge losses
    2) longer response times
    3) lower resistance temperatures.

This means that the heating modules designed on the basis of these guidelines, which are those deriving from the aforementioned patents, could be installed in plastic manifolds, but to the detriment of the engine performance characteristics, such as:

    1) Loss of power (charge losses at the intake result in a slower air flow to the inlet of the cylinders and loss power).
    2) Longer starting times (longer pre-ignition time)
    3) Higher pollution emissions due to the long response times prevent sophisticated heating strategies for the intake gases following sudden accelerations and decelerations of the engine.

All the above-mentioned previous patents disclose no safety functions based on the control and measurement of any of their parts to guarantee their optimum functionality under the conditions mentioned, and in others, which we call shall degraded operation, e.g. in those found in the repair workshops, where, in the face of possible damage, the operative could feed the power directly from the battery and measure the current to determine whether the heating module is broken or not. In this case, the more strictly the requirements for minimum charge loss, high dissipated power and short response times are adhered to, the frame will reach the maximum operating temperature of the plastic in less time and the manifold will begin to deform before the operative completes the test. A similar statement should be made with regard to a control failure, for example one resulting from an accident and the heater is connected directly to the battery, which could cause a fire in the vehicle. By inserting a control circuit between the battery and the heating element, which automatically cuts off the power supply if the temperature of the frame exceeds the temperature for safe operation, we guarantee that in the case of degraded operation the heating module does not do any damage to the other parts of the engine.

## DESCRIPTION OF THE INVENTION

The module for heating the intake gases of an internal combustion engine, incorporating electronic temperature, according to this invention, satisfactorily solves the problem outlined in each of the points previously described, comprising two fundamental parts: a heating element (resistance in the form of a continuous strip), and a power control circuit which measures a representative temperature of the heating module and manages the distribution of electricity in the heating element, which parts are located or integrated in the same frame of metal, preferably aluminium.

Within the same heating module the heating element is installed so that it is insulated from the frame by means of ceramic insulants on which it rests and expands freely to absorb their expansions, thereby preventing them from deforming.

This heating element is connected electrically at one of its ends to the frame, by means of which it is earthed, and it is connected at the other end by means of a conductor to the power control circuit, from which it derives the battery supply. It should be stated that when we talk of the heating element we are referring to a modular heating element in which the electrical resistance, in the form of a continuous strip, may be a single resistance or several resistances. Whether the heating element consists of a single or several resistances will determine the maximum power required to be dissipated in each particular application (unit cubic capacity of the engine, number of cylinders, etc.), and the power that each of the power switches is able to manage so that each switch controls a single resistance.

The power control circuit adhered to (located on) the frame itself consists of at least the following components: power switches (as many as the number of resistances of the heating element, each controlling one resistance), control logic, temperature sensor / sensors and control connector by means of which communication is made to the Electronic Control Unit (ECU) of the engine. For reasons of thermal transmission, each of these components is mounted on a base, preferably ceramic, adhered with a heat conducting adhesive or gluing material to the frame. This circuit provides preferably modulated control of the power dissipated in the heating element. The quantity of dissipated power supplied to the intake air flow is determined at all times by the ECU, and if at any time the temperature of the frame exceeds the maximum temperature of the plastic of the intake manifold, with which it is in contact, the power supply to the heating element is then automatically cut off.

Although, as mentioned above, the present heating module, incorporating a power circuit, is designed to be installed in a plastic manifold, this does not rule out the possibility of installing it in manifolds of other conventional materials, particularly those consisting or formed from materials with a low operating temperature.

A knowledge of the temperature of the frame of the heating module is essential for providing a protective function that prevents the temperature of the points of the module that are in contact with the plastic intake manifold from exceeding that at which the plastic begins to deform. There are two possible ways of determining this temperature, one by indirect methods and the other, the best method, by directly measurement, by putting a temperature sensor in direct contact, or via low, known thermal impedances, with the heating module support.

The indirect methods will depend mainly on the exact location of the temperature sensor or sensors, these being as follows:

1) Measurement of the temperature of the intake manifold at points close to the points of contact with the heating module. This method can be optimised because the thermal conductivity of the plastic is very low, and a minimum tolerance in the positioning of the sensor will be expressed in very large temperature differences. Moreover, the sensor must be installed by connecting it to the control circuit with cables that can be incorporated in its respective connector, which will increase its cost.

2) Measurement of the temperature of the heating element (of the resistance). Due to the high temperatures which can be reached in the heating element (1000 °C), there are only two ways of carrying out the measurement, one by designing the heating element so that it can be used as a thermocouple (as proposed in patent application PCT/ES02/00369 of the same applicant), which describes a resistance with an integrated thermocouple or a thermocouple welded to the heating element. However, this is an expensive solution.

3) Measurement of the increase in temperature of the air flow downstream from the heating module. The measurement of the temperature of the flow will depend on the position of the sensor, particularly if it is very close to the heating module. Because it is an obstacle to the passage of air, it produces local turbulences which prevent the measurement from being totally accurate. If the measurement is carried out further away from the heating module, this will make installation more expensive because it may incorporate a connector, it may have a specific housing in the manifold, etc.

The preferred assembly is one which enables the temperature sensor to be incorporated in the control circuit, and where the circuit is in turn incorporated in the frame, which allows direct measurement of the temperature of the said frame. This assembly, as well as the location of the sensor, will prevent direct connection of the heating element to the battery, which will enable us to install it safely in the plastic manifold because the heating element can only be supplied via the control circuit, which will require the temperature sensor to be located at the measurement and operating point.
This assembly solution provides a number of clearly advantageous characteristics of the heating module, which are described below..

- It facilitates the measurement of the temperature of the frame of the heating module and protects it from overheating, at minimum cost, because this is a single module which integrates all the measuring and actuating elements.
- The module provides a robust temperature measurement because there are no cables or connections.
- During manufacture the position of the temperature sensor on the frame itself means that the protective temperature has a low dispersion.
- Due to its compactness, the mechanical strength is very high and the module satisfactorily supports the typical vibrations of an internal combustion engine.

**DESCRIPTION OF THE DRAWINGS**

To supplement the description that has been given, and to assist in providing a clearer understanding of the characteristics of the invention, in accordance with a preferred embodiment of the same, a set of drawings is attached as an integral part of the said description, in which the following is shown by way of non-exhaust illustration:

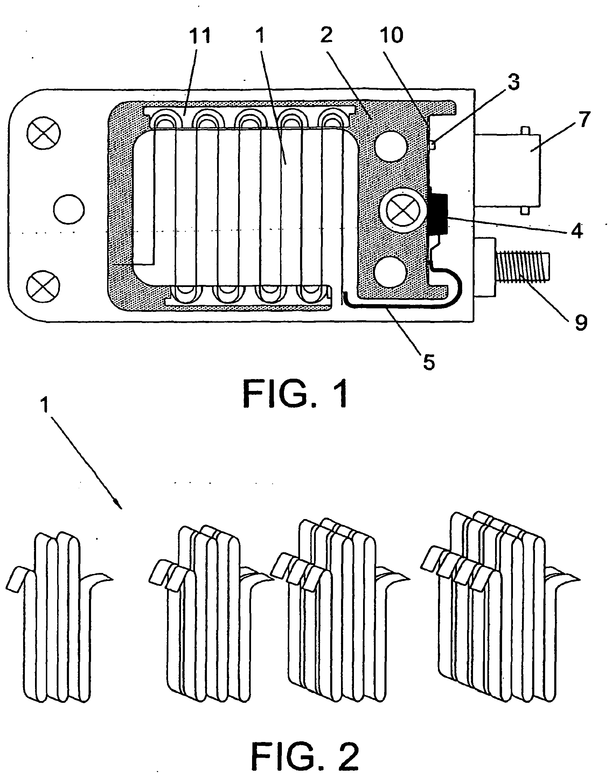

Figure 1. - Shows a front view of the module for heating the intake gases of an internal combustion engine, in which its constituent elements are shown.

Figure 2. - Shows a representation of the heating element, consisting of one or more resistances of the strip type.

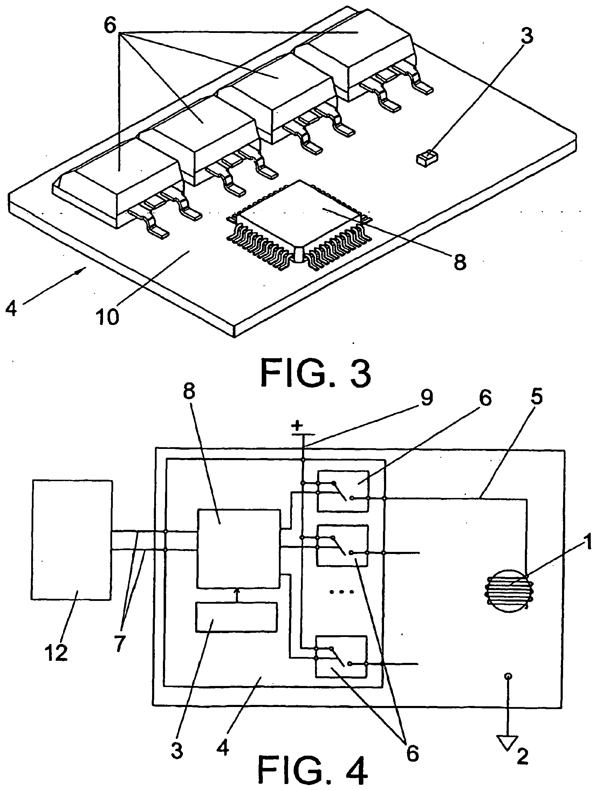

Figure 3. - Shows a perspective view of the control circuit in which can be seen the power switches, the control logic and the integrated temperature sensor.

Figure 4. - Shows a schematic diagram indicating the connections of the heating module to the electronic control unit and the battery.

Figure 5. - Shows the heating module incorporated in a manifold, indicating the temperature sensor inserted in the wall of the plastic manifold.

Figure 6. - Shows the heating module incorporated in the manifold, indicating the temperature sensor of the thermocouple type forming part of the heating element.

Figure 7. - Shows the heating module incorporated in a manifold, indicating the temperature sensor downstream from the heating module.

Figure 8. - Shows the heating module incorporated in a manifold, indicating the temperature sensor integrated in the control circuit.

**PREFERRED EMBODIMENT OF THE INVENTION**

The module for heating the intake gases of an internal combustion engine, which constitutes the object of this invention, is of the type used for heating the gases circulating through the intake pipe (13) by means of a heating element (1) supplied by a battery, which receives its supply from a power control circuit (4) controlled by an electronic control unit (ECU) (12) of the engine.

The heating module is characterised by this basic configuration in that it incorporates a metal frame(2), preferably of aluminium, in which is adhered the power control circuit (4), and in which is installed heating element(1), both forming the same module to allow electronic control of the temperature of the intake gases.

The power control circuit (4) is preferably mounted on a ceramic base (10) adhered with a heating conducting product to frame (2), and incorporates essentially a control logic (8) to which is connected a temperature sensor (3) and at least one power switch (6), which controls heating element (1), consisting of one or more resistances, preferably a power switch(6), for each resistance.

From power control circuit (4) runs a supply connection (9), which is led to the positive terminal of the battery, an electrical connection, cable or soldered terminal (5) integrated in the module, which is tamper-proof or supplied from the outside, which connects the circuit to the heating element (11), which is in turn connected to the earth of frame (2) at its other end, and a control connector (7) which transits the temperature signals picked up by temperature sensor (3) to the electronic control unit of the engine, which responds by transmitting signals to control circuit (4) to regulate the power applied to heating element (1).

Heating elements (1) consist of resistances of the strip type, which are mounted on ceramic insulants (1), in which the resistances are supported and expand in order to absorb expansions and prevent their deformations, the ceramic insulant (11) consisting of an independent element for each resistance, or forming a single monobloc part which incorporates all the resistances.

The module for heating intake gases can be used essentially for intake manifolds (14) consisting of materials with a low operating temperature, particularly plastic manifolds.

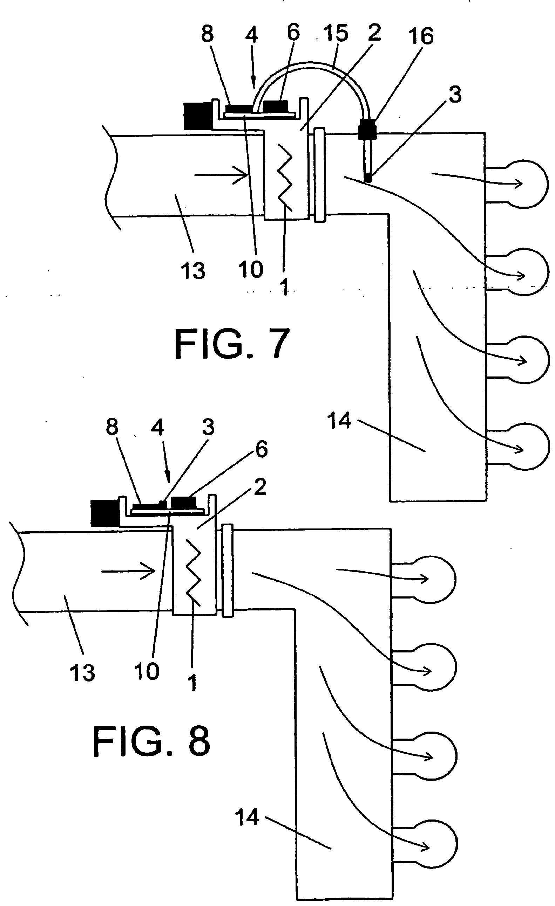

A preferred embodiment is considered in which temperature sensor (3) is integrated in control circuit (4) to provide precise control of the temperature, as shown in Figure 8.

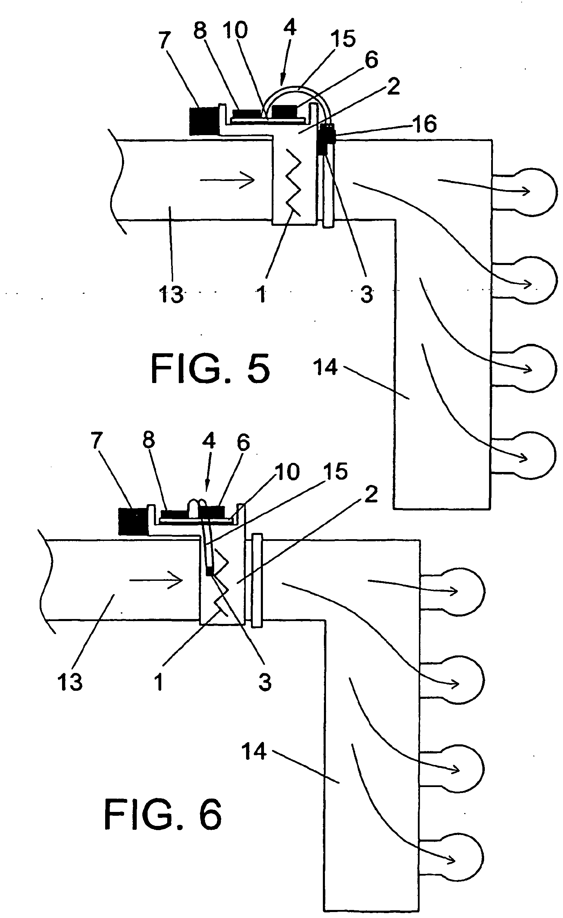

In other alternative designs, other assembly solutions for temperature sensor (3) are considered. Temperature sensor (3) may be inserted in the wall of plastic manifold (14), as shown in Figure 5, can be integrated in heating element(1) itself, as shown in Figure 6, or can be arranged downstream from heating element (1), a shown in Figure 7.

For connecting temperature sensor (3) to control circuit (4), shown in Figures 5, 6 and 7, use will be made of a cable (15), with the optional insertion of an additional connector (16).

Claims

1. Module for heating the intake gases of an internal combustion engine, incorporating electronic temperature control which is used for heating the gases circulating through the intake pipe (13) by means of a heating element (1) connected to a battery (9) from which it receives a supply via a power control circuit (4) controlled by an electronic control unit (ECU) (12) of the engine, wherein the module incorporates a frame (2) wherein:

    - the power control circuit (4) is adhered, and
    - the heating element (1), consisting of a least one heating resistance, is installed,

both forming the same module to allow electronic control of the temperature of the intake gases; and
wherein the control circuit (4) is inserted between the battery (9) and the heating element (1), and **characterised in that** the control circuit (4) is arranged for automatically cutting off the supply of power from the battery (9) to the heating element (1) if the temperature of the frame (2) exceeds a temperature of safe operation.

2. Module for heating the intake gases of an internal combustion engine, incorporating an electronic temperature control, according to Claim 1, **characterised in that** the power control circuit (4) incorporates essentially a control logic (8) to which is connected a temperature sensor (3), and at least one power switch (6) which controls the heating element (1).

3. Module for heating the intake gases of an internal combustion engine, incorporating an electronic temperature control, according to Claims 1 and 2, **characterised in that** the power control circuit (4) is mounted on a ceramic base (1) adhered with a heat conducting product to the frame (2) itself.

4. Module for heating the intake gases of internal combustion engine, incorporating an electronic temperature control, according to Claim 2, **characterised in that** the power control circuit (4) is provided with a power switch (6) for each of the heating resistances configuring the heating element (1).

5. Module for heating the intake gases of internal combustion engine, incorporating an electronic temperature control, according to the preceding claims, **characterised in that** from the power control circuit (4) runs a supply connection (9) which is led to the positive terminal of the battery, an electrical conductor (5) which connects it to the heating element (1), which is in turn connected to the earth of the metal frame (2) at its other end, and a control connector (7) which transmits the temperature signals picked up by the temperature sensor (3) to the electronic control unit of the engine, which responds by transmitting signals to the control circuit (4) for regulating the power applied to the heating element (1) via the control logic (8) and the power switches (6).

6. Module for heating the intake gases of internal combustion engine, incorporating an electronic temperature control, according to Claims 1, 2 and 5, **characterised in that** the temperature sensor (3) is thermally connected to the frame (2), since it is integrated in the actual power control circuit (4) to provide the temperature control.

7. Module for heating the intake gases of internal combustion engine, incorporating an electronic temperature control, according to Claims 1, 2 and 5, **characterised in that** the temperature sensor (3) is inserted in the wall of the intake manifold (14) for providing the temperature control.

8. Module for heating the intake gases of internal combustion engine, incorporating an electronic temperature control, according to Claims 1, 2 and 5, **characterised in that** the temperature sensor (3) is integrated in the heating element (1) for providing the temperature control.

9. Module for heating the intake gases of internal combustion engine, incorporating an electronic temperature control, according to Claims 1, 2 and 5, **characterised in that** the temperature sensor (3) is located downstream from the heating element (1).

10. Module for heating the intake gases of internal combustion engine, incorporating an electronic temperature control, according to Claims 1, 2 , 4 and 5, **characterised in that** the heating element (1) consists of at least one resistance of the strip type, with ceramic insulants (11) in which the resistance (1) is supported and expands in order to absorb expansions and avoid deformations.

11. Module for heating the intake gases of internal combustion engine, incorporating an electronic temperature control, according to Claim 10, **characterised in that** there are separate ceramic insulants (11) for each resistance.

12. Module for heating the intake gases of internal combustion engine, incorporating an electronic temperature control, according to Claim 10, **characterised in that** the ceramic insulants (11) form a single monobloc part which includes all the resistances.

13. Module for heating the intake gases of internal combustion engine, incorporating an electronic temperature control, according to Claim 1, **characterised in that** it is installed in manifolds composed of materials with a low operating temperature.

14. Module for heating the intake gases of internal combustion engine, incorporating an electronic temperature control, according to Claim 13, **characterised in that** it is installed in a plastic intake manifold.

15. Module for heating the intake gases of internal combustion engine, incorporating an electronic temperature control, according to Claim 1, **characterised in that** the frame (2) is of metal, preferably aluminium.

16. Module for heating the intake gases of internal combustion engine, incorporating an electronic temperature control, according to Claims 7, 8 and 9, **characterised in that** the connection of the temperature sensor (3) to the control circuit (4) is made by means of cables (15).

17. Module for heating the intake gases of internal combustion engine, incorporating an electronic temperature control, according to Claim 16, **characterised in that** an additional connector (16) is arranged between the cable (15) and the temperature sensor.

18. Module for heating the intake gases of internal combustion engine, incorporating an electronic temperature control, according to Claim 5, **characterised in that** the electrical conductor (5) is integrated and hermetically sealed inside the module to prevent tampering and possible supply of the heating element (1) from the outside.

**Patentansprüche**

1. Modul zum Erhitzen der Ansauggase eines Verbrennungsmotors mit integrierter elektronischer Temperatursteuerung, das dazu dient, die Gase, die durch das Ansaugrohr (13) zirkulieren, mittels eines Heizelementes (1) zu erhitzen, das mit einer Batterie (9) verbunden ist, von der es über eine Stromsteuerschaltung (4) gespeist wird, die durch eine elektronische Steuereinheit (ECU) (12) des Motors gesteuert wird, wobei das Modul einen Rahmen (2) enthält, wobei:

    - die Stromsteuerschaltung (4) angeklebt ist, und
    - das Heizelement (1), das aus wenigstens einem Heizwiderstand besteht, installiert ist,

wobei beide das gleiche Modul bilden, um die elektronische Steuerung der Temperatur der Ansauggase zuzulassen;

und

wobei die Steuerschaltung (4) zwischen der Batterie (9) und dem Heizelement (1) eingesetzt ist, und **dadurch gekennzeichnet, dass** die Steuerschaltung (4) zur automatischen Abschaltung der Stromzuführung von der Batterie (9) zum Heizelement (1) vorgesehen ist, falls die Temperatur des Rahmens (2) eine betriebssichere Temperatur überschreitet.

2. Modul zum Erhitzen der Ansauggase eines Verbrennungsmotors mit einer integrierten elektronischen Temperatursteuerung nach Anspruch 1, **dadurch gekennzeichnet, dass** die Stromsteuerschaltung (4) im Wesentlichen eine Steuerlogik (8), mit der ein Temperatursensor (3) verbunden ist, und wenigstens einen Stromschalter (6) enthält, der das Heizelement (1) steuert.

3. Modul zum Erhitzen der Ansauggase eines Verbrennungsmotors mit einer integrierten elektronischen Temperatursteuerung nach den Ansprüchen 1 und 2, **dadurch gekennzeichnet, dass** die Stromsteuerschaltung (4) an einem keramischen Träger (1) angebracht ist, der mit einem wärmeleitenden Erzeugnis an dem eigentlichen Rahmen (2) angeklebt ist.

4. Modul zum Erhitzen der Ansauggase eines Verbrennungsmotors mit einer integrierten elektronischen Temperatursteuerung nach Anspruch 2, **dadurch gekennzeichnet, dass** die Stromsteuerschaltung (4) mit einem Stromschalter (6) für jeden der Heizwiderstände versehen ist, die das Heizelement (1) bilden.

5. Modul zum Erhitzen der Ansauggase eines Verbrennungsmotors mit einer integrierten elektronischen Temperatursteuerung nach den vorangehenden Ansprüchen, **dadurch gekennzeichnet, dass** von der Stromsteuerschaltung (4) aus eine Speiseverbindung (9) verläuft, die zu dem positiven Anschluss der Batterie geführt wird, ein elektrischer Leiter (5), welcher sie mit dem Heizelement (1) verbindet, das seinerseits an seinem anderen Ende mit der Erde des Metallrahmens (2) verbunden ist, und ein Steuerverbinder (6), welcher die von dem Temperatursensor (3) erfassten Temperatursignale zu der elektronischen Steuereinheit des Motors überträgt, die reagiert, indem sie Signale zu der Steuerschaltung (4) überträgt, um den an das Heizelement (1) über die Steuerlogik (8) und die Stromschalter (6) angelegten Strom zu regulieren.

6. Modul zum Erhitzen der Ansauggase eines Verbrennungsmotors mit einer integrierten elektronischen Temperatursteuerung nach den Ansprüchen 1, 2 und 5, **dadurch gekennzeichnet, dass** der Temperatursensor (3) thermisch mit dem Rahmen (2) verbunden ist, da er in die eigentliche Stromsteuerschaltung (4) integriert ist, um die Temperatursteuerung zu ermöglichen.

7. Modul zum Erhitzen der Ansauggase eines Verbrennungsmotors mit einer integrierten elektronischen Temperatursteuerung nach den Ansprüchen 1, 2 und 5, **dadurch gekennzeichnet, dass** der Temperatursensor (3) in die Wand des Ansaugkrümmers (14) eingesetzt ist, um die Temperatursteuerung zu ermöglichen.

8. Modul zum Erhitzen der Ansauggase eines Verbrennungsmotors mit einer integrierten elektronischen Temperatursteuerung nach den Ansprüchen 1, 2 und 5, **dadurch gekennzeichnet, dass** der Temperatursensor (3) in das Heizelement (1) integriert ist, um die Temperatursteuerung zu ermöglichen.

9. Modul zum Erhitzen der Ansauggase eines Verbrennungsmotors mit einer integrierten elektronischen Temperatursteuerung nach den Ansprüchen 1, 2 und 5, **dadurch gekennzeichnet, dass** der Temperatursensor (3) dem Heizelement (1) nachgelagert ist.

10. Modul zum Erhitzen der Ansauggase eines Verbrennungsmotors mit einer integrierten elektronischen Temperatursteuerung nach den Ansprüchen 1, 2, 4 und 5, **dadurch gekennzeichnet, dass** das Heizelement (1) aus wenigstens einem Widerstand vom Streifentyp mit keramischen Isolierstoffen (11) besteht, in denen der Widerstand (1) gelagert ist und sich ausdehnt, um Ausdehnungen aufzunehmen und Verformungen zu vermeiden.

11. Modul zum Erhitzen der Ansauggase eines Verbrennungsmotors mit einer integrierten elektronischen Temperatursteuerung nach Anspruch 10, **dadurch gekennzeichnet, dass** separate keramische Isolierstoffe (11) für jeden Widerstand vorhanden sind.

12. Modul zum Erhitzen der Ansauggase eines Verbrennungsmotors mit einer integrierten elektronischen Temperatursteuerung nach Anspruch 10, **dadurch gekennzeichnet, dass** die keramischen Isolierstoffe (11) ein einzelnes, aus einem Stück bestehendes Teil bilden, das alle Widerstände einschließt.

13. Modul zum Erhitzen der Ansauggase eines Verbrennungsmotors mit einer integrierten elektronischen Temperatursteuerung nach Anspruch 1, **dadurch gekennzeichnet, dass** es in Krümmern installiert ist, die aus Materialien mit einer niedrigen Arbeitstemperatur bestehen.

14. Modul zum Erhitzen der Ansauggase eines Verbrennungsmotors mit einer integrierten elektronischen Temperatursteuerung nach Anspruch 13, **dadurch gekennzeichnet, dass** es in einem Kunststoff-Ansaugverteiler installiert ist.

15. Modul zum Erhitzen der Ansauggase eines Verbrennungsmotors mit einer integrierten elektronischen Temperatursteuerung nach Anspruch 1, **dadurch gekennzeichnet, dass** der Rahmen (2) aus Metall, vorzugsweise Aluminium, besteht.

16. Modul zum Erhitzen der Ansauggase eines Verbrennungsmotors mit einer integrierten elektronischen Temperatursteuerung nach den Ansprüchen 7, 8 und 9, **dadurch gekennzeichnet, dass** die Verbindung des Temperatursensors (3) mit der Steuerschaltung (4) mittels Kabel (15) hergestellt wird.

17. Modul zum Erhitzen der Ansauggase eines Verbrennungsmotors mit einer integrierten elektronischen Temperatursteuerung nach Anspruch 16, **dadurch gekennzeichnet, dass** ein zusätzlicher Verbinder (16) zwischen dem Kabel (15) und dem Temperatursensor angeordnet ist.

18. Modul zum Erhitzen der Ansauggase eines Verbrennungsmotors mit einer integrierten elektronischen Temperatursteuerung nach Anspruch 5, **dadurch gekennzeichnet, dass** der elektrische Leiter (5) in das Innere des Moduls integriert und hermetisch darin abgedichtet ist, um unsachgemäßen Eingriff und mögliche Speisung des Heizelementes (1) von außen zu verhindern.


**Revendications**

1. Module de chauffage des gaz d'admission d'un moteur à combustion interne incorporant une commande électronique de température qui est utilisé pour le chauffage des gaz circulant dans la conduite d'admission (13) au moyen d'un élément chauffant (1) connecté à une batterie (9) depuis laquelle il reçoit une alimentation par l'intermédiaire d'un circuit de commande de puissance (4), commandé par une unité de commande électronique (ECU) (12) du moteur, dans lequel le module comporte un châssis (2) dans lequel :

   - le circuit de commande de puissance (4) est adhéré, et
   - l'élément chauffant (1) consistant en au moins une résistance chauffante, est installé,

   les deux formant le même module pour permettre la commande électronique de la température des gaz d'admission ;
   et
   dans lequel le circuit de commande (4) est inséré entre la batterie (9) et l'élément chauffant (1), et **caractérisé en ce que** le circuit de commande (4) est disposé pour couper automatiquement l'alimentation en puissance depuis la batterie (9) à l'élément chauffant (1) si la température du châssis (2) excède une température de fonctionnement sûr.

2. Module de chauffage des gaz d'admission d'un moteur à combustion interne incorporant une commande électronique de température selon la revendication 1, **caractérisé en ce que** le circuit de commande de puissance (4) incorpore essentiellement une logique de commande (8) à laquelle est connecté un capteur de température (3) et au moins un commutateur de puissance (6) qui commande l'élément chauffant (1).

3. Module de chauffage des gaz d'admission d'un moteur à combustion interne incorporant une commande électronique de température selon les revendications 1 et 2, **caractérisé en ce que** le circuit de commande de puissance (4) est monté sur une base en céramique (1) adhérée avec un produit conducteur de chaleur au propre châssis (2).

4. Module de chauffage des gaz d'admission d'un moteur à combustion interne incorporant une commande électronique de température selon la revendication 2, **caractérisé en ce que** le circuit de commande de puissance (4) est pourvu d'un commutateur de puissance (6) pour chacune des résistances chauffantes constituant l'élément chauffant (1).

5. Module de chauffage des gaz d'admission d'un moteur à combustion interne incorporant une commande électronique de température selon les revendications précédentes, **caractérisé en ce que** depuis le circuit de commande de puissance (4) passe une connexion d'alimentation (9) qui est dirigée vers la borne positive de la batterie, un conducteur électrique (5) qui le connecte à l'élément chauffant (1) qui est lui-même connecté à la masse du châssis métallique (2) par son autre extrémité et un connecteur de commande (7) qui transmet les signaux de température récoltés par le capteur de température (3) à l'unité de commande électronique du moteur, qui répond en transmettant des signaux au circuit de commande (4) pour réguler la puissance appliquée à l'élément chauffant (1) par l'intermédiaire de la logique de commande (8) et du commutateur de puissance (6).

6. Module de chauffage des gaz d'admission d'un moteur à combustion interne incorporant une commande électronique de température selon les revendications 1, 2 et 5, **caractérisé en ce que** le capteur de température (3) est connecté thermiquement au châssis (2) car il est intégré dans le circuit réel de commande de puissance (4) pour assurer la commande de la température.

7. Module de chauffage des gaz d'admission d'un moteur à combustion interne incorporant une commande électronique de température selon les revendications 1, 2 et 5, **caractérisé en ce que** le capteur de température (3) est intégré dans la paroi du collecteur d'admission (14) pour assurer la commande de température.

8. Module de chauffage des gaz d'admission d'un moteur à combustion interne incorporant une commande électronique de température selon les revendications 1, 2 et 5, **caractérisé en ce que** le capteur de température (3) est intégré dans l'élément chauffant (1) pour assurer la commande de température.

9. Module de chauffage des gaz d'admission d'un moteur à combustion interne incorporant une commande électronique de température selon les revendications 1, 2 et 5, **caractérisé en ce que** le capteur de température (3) est situé en aval de l'élément chauffant (1).

10. Module de chauffage des gaz d'admission d'un moteur à combustion interne incorporant une commande électronique de température selon les revendications 1, 2, 4 et 5, **caractérisé en ce que** l'élément chauffant (1) consiste en au moins une résistance du type à ruban avec des isolants en céramique (11) sur lesquels la résistance (1) est supportée et se dilate pour absorber les dilatations et éviter les déformations.

11. Module de chauffage des gaz d'admission d'un moteur à combustion interne incorporant une commande électronique de température selon la revendication 10, **caractérisé en ce qu'**il y a des isolants en céramique (11), séparés pour chaque résistance.

12. Module de chauffage des gaz d'admission d'un moteur à combustion interne incorporant une commande électronique de température selon la revendication 10, **caractérisé en ce que** les isolants en céramique (11) forment une seule pièce monobloc comportant toutes les résistances.

13. Module de chauffage des gaz d'admission d'un moteur à combustion interne incorporant une commande électronique de température selon la revendication 1, **caractérisé en ce qu'**il est installé dans des collecteurs composés de matériaux à basse température de fonctionnement.

14. Module de chauffage des gaz d'admission d'un moteur à combustion interne incorporant une commande électronique de température selon la revendication 13, **caractérisé en ce qu'**il est installé dans un collecteur d'admission en matière plastique.

15. Module de chauffage des gaz d'admission d'un moteur à combustion interne incorporant une commande électronique de température selon la revendication 1, **caractérisé en ce que** le châssis (2) est en métal, de préférence en aluminium.

16. Module de chauffage des gaz d'admission d'un moteur à combustion interne incorporant une commande électronique de température selon les revendications 7, 8 et 9, **caractérisé en ce que** la connexion du capteur de température (3) au circuit de commande (4) est faite au moyen de câbles (15).

17. Module de chauffage des gaz d'admission d'un moteur à combustion interne incorporant une commande électronique de température selon la revendication 16, **caractérisé en ce qu'**un connecteur supplémentaire (16) est disposé entre le câble (15) et le capteur de température.

18. Module de chauffage des gaz d'admission d'un moteur à combustion interne incorporant une commande électronique de température selon la revendication 5, **caractérisé en ce que** le conducteur électrique (5) est intégré et scellé hermétiquement à l'intérieur du le module pour éviter les altérations et une possible alimentation de l'élément chauffant (1) depuis l'extérieur.

FIG. 1

FIG. 2

FIG. 3

FIG. 4

FIG. 5

FIG. 6

FIG. 7

FIG. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4512322 A
- US 4685437 A
- US 5988146 A
- WO 0034643 A
- US 20020000221 A
- ES 0200369 W